# EUROPÄISCHE PATENTANMELDUNG

(11) **EP 4 436 144 A1**
(43) Veröffentlichungstag der Anmeldung: **25.09.2024**
(21) Anmeldenummer: 24165480.5
(22) Anmeldetag: 22.03.2024
(51) Int. Cl.: H04L 67/61

(54) **STANDORTBEZOGENE STEUERUNG ÜBER DAS INTERNET ERFOLGENDER NUTZUNG VON CLOUDSERVICES**

(30) Priorität: 23.03.2023 DE 102023107262
(71) Anmelder: Deutsche Telekom AG, 53113 Bonn (DE)
(72) Erfinder: SCHRAUB, Stefan, 61239 Ober-Mörlen (DE)
(74) Vertreter: Nern, Peter-Michael

(57) **Zusammenfassung**

Die Erfindung betrifft eine Lösung zur standortbezogenen Steuerung der mittels Endeinrichtungen einer Nutzerdomäne (1) über das Internet (7) erfolgenden Nutzung von Cloudservices, welche durch einen vom Betreiber der Nutzerdomäne (1) ausgewählten Cloud Provider CP auf Cloudeinrichtungen einer von dem CP an unterschiedlichen territorialen Standorten betriebenen Cloudinfrastruktur (2) bereitgestellt werden. Daten, welche bei der Nutzung von Cloudservices des CP zwischen einer Internetzugangseinrichtung der Nutzerdomäne (1) und den diese Cloudservices bereitstellenden Cloudeinrichtungen über das Internet (7) ausgetauscht werden, werden über Netzwerkeinrichtungen eines dem Betreiber der Nutzerdomäne den Zugang zum Internet bereitstellenden Internet Service Providers ISP und über einen von mehreren von diesen Netzwerkeinrichtungen umfassten Übergabepunkten (4₁, 4₂, 4₃, ...4ₙ) übertragen. Durch einen Cloud Location Peering Manager CLPM (5) wird dabei unter Rückgriff auf Lokalisierungsinformationen zum Standort der Internetzugangseinrichtung der Nutzerdomäne (1), zu Lokationen der Übergabepunkte (4₁, 4₂, 4₃, ...4ₙ) sowie zu den Standorten des CP in einem automatisierten Prozess der unter dem Gesichtspunkt minimaler Datenübertragungszeiten zu verwendende Übergabepunkt (4₁, 4₂, 4₃, ...4ₙ) des ISP berechnet.

## Beschreibung

Die Erfindung betrifft eine Lösung, welche es ermöglicht, die mittels computertechnischer Einrichtungen einer Nutzerdomäne über das Internet erfolgende Nutzung von Cloudservices standortbezogen zu steuern. Sie bezieht sich hierbei auf die Nutzung von Cloudservices, welche durch einen vom Betreiber der Nutzerdomäne ausgewählten Cloudprovider (im Weiteren auch CP) auf Cloudeinrichtungen einer von dem Cloudprovider an unterschiedlichen territorialen Standorten betriebenen Cloudinfrastruktur bereitgestellt werden. Gegenstände der Erfindung sind ein entsprechendes Verfahren und ein zur Durchführung dieses Verfahrens ausgebildetes System.

Mit dem steigenden Grad der Digitalisierung des gesellschaftlichen Lebens, aber insbesondere der gesamten wirtschaftlichen Wertschöpfung, steigt auch der Aufwand für die Haltung der im Zuge dessen verarbeiteten Daten stark an. Aus diesem Grund, aber auch aus weiteren Gründen, wie beispielsweise Anforderungen an die Perfomance große Datenmengen haltender und verarbeitender Systeme sowie an die Zuverlässigkeit der Datenablage, zeichnet sich insbesondere in vielen wirtschaftlichen Bereichen eine Tendenz ab, Anwendungen, wie unter anderem die Datenhaltung, von einer rein lokalen Ebene auf eine Ebene zu verschieben, bei welcher diese durch darauf spezialisierte und mit entsprechenden hochperformanten Hardwareeinrichtungen ausgestattete Unternehmen bereitgestellt werden.

Durch die vorgenannten Unternehmen werden dazu entsprechende Services angeboten. Beispiele hiefür sind Software as a Service (SaaS), Platform as a Service (PaaS) oder Infrastructure as a Service (IaaS), welche gegebenenfalls auch miteinander interagieren und auf leistungsfähigen Einrichtungen mit sehr hoher Speicherkapazität als Cloudservices zur Nutzung durch Dritte, insbesondere durch andere Unternehmen, angeboten werden. In DE 10 2021 127 543 A1 wird zum Beispiel ein Software Defined Network beschrieben in welchem ein Analysator und Netzwerk-Orchestrator als Cloud-Dienste gehostet werden. Der Analysator organisiert hierbei die Auswahl von Kopfstellen-Gateways für die Weiterleitung mittels Zweig-Gateways an das Netzwerk angebundener Teilnetze einer geografischen Region zu Einrichtungen eines Kernstandortes.

Durch derartige Angebote nutzende Unternehmen erfolgt die Nutzung entsprechender Cloudservices über das Internet. Ein weiterer Treiber dieser Entwicklung ist die zunehmende Arbeitsteilung bei der wirtschaftlichen Wertschöpfung, welche dazu führt, dass auf dieselben Datenbestände und IT-Ressourcen mittels unterschiedlicher computertechnischer Einrichtungen eines Unternehmens zugegriffen werden muss.

Eine Nutzerdomäne, wie zum Beispiel ein firmeninternes Netzwerk, ausbildende computertechnische Endeinrichtungen eines Unternehmens oder einer Organisation greifen auf die externen Cloudservices, wie bereits ausgeführt, über das Internet zu. Dieser Zugriff wird hierbei durch die Netzwerkeinrichtungen eines dem Betreiber der Nutzerdomäne den Zugang zum Internet bereitstellenden Internet Service Providers ISP vermittelt. Für den Aufbau der Verbindung zwischen dem Netz des ISP und den Cloudeinrichtungen eines durch den Betreiber der Nutzerdomäne für die Nutzung entsprechender Services ausgewählten Cloudproviders kommen für den Zweck einer gesicherten, das heißt insbesondere auch vor Angriffen geschützten Übertragung von Daten, unterschiedliche Technologien, wie beispielsweise VPN, IPSec, SD-WAN oder ähnliche Technologien, zum Einsatz.

Im Hinblick darauf, dass durch die Anbieter von Cloudservices, das heißt durch Cloudprovider beziehungsweise durch sogenannte Hyperscaler, entsprechende Services bereitstellende Cloudeinrichtungen typischerweise an unterschiedlichen Standorten betrieben werden, obliegt es dem Netzbetreiber, also dem ISP des Betreibers einer Nutzerdomäne, dafür Sorge zu tragen, dass sich für seinen Kunden beim Austausch von Daten zwischen dessen Nutzerdomäne und den Cloudeinrichtungen seines CP möglichst kurze Übertragungszeiten ergeben.

Entsprechendes ist insbesondere bei zeitkritischen Anwendungen von großer Bedeutung. Nach dem derzeitigen Stand der Technik wird dazu durch Administratoren des ISP typischerweise aus einer Mehrzahl sich im Netz des ISP befindender Übergabepunkte zu Standorten der Cloudinfrastruktur des CP derjenige Übergabepunkt ermittelt, von welchem aus die geringste Distanz zu einem Standort des CP besteht. Dies kann vergleichsweise aufwendig und durch die Einbeziehung menschlicher Tätigkeit auch fehlerbehaftet sein.

Aufgabe der Erfindung ist es daher, eine Lösung zu schaffen, welche es einem Internet Service Provider ISP auf einfache und zuverlässige Weise ermöglicht, computertechnischen Einrichtungen eines Kunden einen möglichst schnellen Zugriff auf Cloudservices vermitteln zu können, die durch einen von dem Kunden ausgewählten Cloud Provider CP auf Cloudeinrichtungen einer an unterschiedlichen territorialen Standorten betriebenen Cloudinfrastruktur bereitgestellt werden. Hierzu sind ein entsprechendes Verfahren anzugeben und ein zur Durchführung des Verfahrens geeignetes System bereitzustellen.

Die Aufgabe wird durch ein Verfahren mit den Merkmalen des Patentanspruchs 1 gelöst. Ein die Aufgabe lösendes, zur Durchführung des Verfahrens geeignetes System wird durch den ersten und unabhängigen Sachanspruch, den Patentanspruch 6, charakterisiert. Vorteilhafte Aus- und Weiterbildungen der Erfindung sind durch die entsprechenden Unteransprüche gegeben.

Bevor das Verfahren und das System näher beschrieben werden, soll zunächst ein Überblick über bereits vorstehend und in der weiteren Beschreibung verwendete sowie in den Patentansprüchen gebrauchte Abkürzungen und über die ihnen hierbei zugrunde gelegte Bedeutung gegeben werden. Demgemäß werden folgende Abkürzungen mit der nachfolgend angegebenen Bedeutung verwendet:
- CLPM: = Cloud Location Peering Manager (Managementkomponente)
- CP: = Cloud Provider
- ISP: = Internet Service Provider
- MDO: = Multi Domain Orchestrator
- NMS: = Network Management System

Bei dem zur Lösung der Aufgabe vorgeschlagenen Verfahren handelt es sich um ein Verfahren, bei dem die Nutzung von Cloudservices, welche durch einen vom Betreiber einer Nutzerdomäne ausgewählten Cloud Provider (CP) auf Cloudeinrichtungen einer an unterschiedlichen territorialen Standorten betriebenen Cloudinfrastruktur bereitgestellt werden, standortbezogen gesteuert wird. Essenzielle Teile dieses Verfahrens laufen hierbei automatisiert ab. Allerdings ist in diesem Zusammenhang der Begriff "Steuerung", wie noch näher auszuführen sein wird, nicht zwingend in einem rein technischen Sinne zu verstehen.

Mit Blick auf die vorstehenden Erläuterungen zum Stand der Technik geht die vorgeschlagene Lösung von einer Konstellation aus, bei welcher die über das Internet erfolgende Nutzung von Cloudservices eines CP durch netzwerktechnische Einrichtungen eines ISP für die Kunden dieses Internet Service Providers vermittelt wird. Ein jeweiliger Kunde des ISP ist Betreiber einer zumindest eine computertechnische Endeinrichtung respektive ein Endgerät (die Begriffe Endgerät und Endeinrichtung werden im Kontext der Beschreibung und der Patentansprüche synonym gebraucht, zumal eine insoweit eventuell mögliche Unterscheidung für die Erfindung ohne Belang ist) typischerweise aber mehrere solcher Endeinrichtungen umfassenden Nutzerdomäne, wobei den Endeinrichtungen der betreffenden Nutzerdomäne die Nutzung von Cloudservices eines von dem Kunden ausgewählten CP über das Internet ermöglicht werden soll.

Demgemäß umfasst die Nutzerdomäne des Kunden neben seinen die Cloudservices nutzenden computertechnischen Endeinrichtungen beziehungsweise Endgeräten eine Internetzugangseinrichtung. Bei der Nutzung der Cloudservices werden Daten, welche zwischen der vorgenannten Internetzugangseinrichtung und den die Cloudservices an einem der Standorte des CP bereitstellenden Cloudeinrichtungen über das Internet ausgetauscht werden, über Netzwerkeinrichtungen eines dem Betreiber der Nutzerdomäne den Zugang zum Internet bereitstellenden ISP und dabei unter anderem auch über einen von mehreren von diesen Netzwerkeinrichtungen umfassten Übergabepunkten zur Cloudinfrastruktur des CP übertragen.

Gemäß der vorgeschlagenen Lösung wird hierbei durch einen Cloud Location Peering Manager (CLPM), das heißt durch eine dafür ausgebildete und eingerichtete, zur Netzinfrastruktur des ISP gehörende Managementkomponente, unter Rückgriff auf Lokalisierungsinformationen, die in mindestens einer Datenbank gehalten werden, in einem automatisierten Prozess der unter dem Gesichtspunkt minimaler Datenübertragungszeiten bei der Nutzung der Cloudservices zu verwendende Übergabepunkt des ISP berechnet. Das heißt, es wird somit durch den vorgenannten CLPM auch ein unter dem Gesichtspunkt minimaler Datenübertragungszeiten zu bevorzugender, die durch den Betreiber der Nutzerdomäne gewünschten Cloudservices bereitstellender Standort des CP ermittelt. Bei den zuvor angesprochenen Lokalisierungsinformationen handelt es sich um eine Information zum Standort der Internetzugangseinrichtung der jeweiligen Nutzerdomäne, um eine Liste mit den Lokationen der Übergabepunkte im Netz des ISP sowie um eine Liste der zur Cloudinfrastruktur des CP gehörenden Standorte.

Der automatisierte Prozess zur Bestimmung des unter dem Gesichtspunkt minimaler Datenübertragungszeiten zu verwendenden Übergabepunktes des ISP sowie damit des zu bevorzugenden Standorts des CP wird dabei mittels der genannten Managementkomponente des ISP, also mittels des CLPM, im Falle einer erstmaligen, durch eine Endeinrichtung der Nutzerdomäne erfolgenden Anforderung zur Nutzung von Cloudservices des CP und/oder im Falle von Änderungen bei den in der mindestens einen Datenbank gehaltenen Lokalisierungsinformationen durchlaufen.

Entsprechend einer möglichen Implementierung des Verfahrens werden die vom Kunden (vom Betreiber der Nutzerdomäne) angeforderten Cloudservices für die Endeinrichtungen der Nutzerdomäne automatisch durch Cloudeinrichtungen des CP bereitgestellt, welche diese Cloudservices an dem Standort der Cloudinfrastruktur des CP erbringen, der bei der erstmaligen, durch eine Endeinrichtung der Nutzerdomäne erfolgenden Anforderung zur Nutzung von Cloudservices des CP durch den CLPM als zu bevorzugender Standort ermittelt wird. Hierbei wird also den Cloudeinrichtungen des betreffenden Standorts die Anforderung zur Nutzung von Cloudservices in einem automatisierten Prozess über den berechneten Übergabepunkt des ISP zugeleitet.

An dieser Stelle und in diesem Kontext soll nun noch einmal auf den Begriff der "Steuerung" respektive auf das hierbei zugrundeliegende Verständnis einer standortbezogenen Steuerung der über das Internet erfolgenden Nutzung entsprechender Cloudservices eingegangen werden. Wie die Ausführungen zu der zuletzt angesprochenen Ausbildungsform respektive Implementierung des Verfahrens erkennen lassen, kann es sich bei einer solchen Steuerung tatsächlich um einen rein technischen, zumindest nahezu vollständig automatisierten Vorgang handeln, bei welchem eine erstmals die Nutzung eines Cloudservices eines ausgewählten CP anfordernde Endeinrichtung der Nutzerdomäne automatisch an Cloudeinrichtungen des durch den CLPM ermittelten, zu bevorzugenden Standort des CP vermittelt wird. Allerdings ist es in der Praxis so, dass es einem Internet Service Provider (ISP) nicht ohne weiteres gestattet ist, Netzwerkeinrichtungen eines Kunden, welche die Nutzung von Cloudservices anfordern, automatisch an einen bestimmten Standort des vom Kunden ausgewählten Content Providers (CP) zu vermitteln, dass aber zumindest Derartiges möglicherweise seitens eines jeweiligen Kunden nicht erwünscht ist.

Vor diesem Hintergrund kann der Begriff des Steuerns auch im Sinne eines durch den ISP mithilfe seiner technischen Einrichtungen erfolgenden Organisierens einer standortbezogenen Nutzung von Cloudservices verstanden werden. Hierbei werden, wie weiter oben bereits beschrieben, in einem automatisierten Prozess durch eine Einrichtung der Netzinfrastruktur des ISP, nämlich durch den genannten CLPM, der unter dem Gesichtspunkt minimaler Datenübertragungszeiten günstigste Standort des CP und der zur Kontaktierung der Cloudeinrichtungen an diesem Standort zu verwendende Übergabepunkt im Netz des ISP bestimmt. Jedoch werden dann nachfolgend die eine Nutzung von Cloudservices anfordernden Endeinrichtungen einer Nutzerdomäne des Kunden nicht automatisiert an die Cloudeinrichtungen des insoweit ermittelten Standorts des CP vermittelt. Vielmehr erfolgt die standortbezogene Steuerung der Nutzung von Cloudeinrichtungen des durch den Kunden ausgewählten CP dadurch, dass dem Kunden respektive einem Administrator der Nutzerdomäne dieses Kunden, der als günstigster Standort ermittelte Standort des CP lediglich als Vorschlag mitgeteilt wird. Hierbei obliegt es dann dem Kunden, sich gegebenenfalls für diesen oder auch für einen anderen Standort zu entscheiden. In einer solchen Weise, also nicht vollends automatisiert, nämlich unter Berücksichtigung einer entsprechenden Kundenentscheidung, wird sicherlich typischerweise im Falle von Änderungen bei den für die Berechnung des zu verwendenden Übergabepunktes herangezogenen Lokalisierungsinformationen verfahren werden. Dabei ist nämlich davon auszugehen, dass viele Kunden im Falle entsprechender Änderungen dieser Lokalisierungsinformationen nicht unbedingt einen den Standort der von ihnen genutzten Cloudservices betreffenden Umzug wünschen, da im Zusammenhang damit eventuell auch umfangreichere Anpassungen bei ihrer eigenen IT-Infrastruktur erforderlich werden.

Soweit in den vorstehenden Ausführungen und im Zusammenhang mit der Beanspruchung der grundsätzlichen Lösung im Hinblick auf die Berechnung des zu verwendenden Übergabepunkts im Netz des ISP respektive auf die Ermittlung des zu bevorzugenden Standorts des CP auf minimale Datenübertragungszeiten abgestellt wird, ist sicherlich, zumindest bei einer unterstelltermaßen halbwegs harmonisierten Netzinfrastruktur in dem Netz des ISP, davon auszugehen, dass hierbei typischerweise Entfernungen zwischen dem Standort der Internetzugangseinrichtung der jeweils betrachteten Nutzerdomäne und den Übergabepunkten im Netz des ISP sowie zwischen diesen Übergabepunkten und den Standorten der Cloudinfrastruktur des CP von besonderer Bedeutung sind. Daher ist es entsprechend einer praxisgerechten und insoweit gegebenenfalls zu bevorzugenden Implementierung des Verfahrens vorgesehen, dass der zu verwendende Übergabepunkt des ISP von dem CLPM berechnet wird, indem von dieser Managementkomponente derjenige Übergabepunkt ermittelt wird, bei dessen Verwendung sich für den Gesamtübertragungsweg vom Standort der Internetzugangseinrichtung der Nutzerdomäne über den Übergabepunkt des ISP zu einem Standort der Cloudinfrastruktur des CP die geringste Distanz ergibt.

Besonders bevorzugt ist es hierbei, dass die kürzeste Distanz für diesen Gesamtübertragungsweg mit Hilfe der Graphentheorie berechnet wird. Dazu wird ein Graph erstellt, dessen Kanten durch die möglichen Übertragungswege zwischen dem Standort der Internetzugangseinrichtung der Nutzerdomäne und den Übergabepunkten im Netz des ISP sowie zwischen den Übergabepunkten des ISP und den Standorten der Cloudinfrastruktur des CP gebildet werden. Entsprechend ihrer jeweiligen Länge werden diese Kanten dann gewichtet. Durch die Anwendung des Dijkstra-Algorithmus kann unter Berücksichtigung dieser Gewichtung schließlich der kürzeste Gesamtübertragungsweg berechnet und der auf diesem liegende Übergabepunkt im Netz des ISP als der zu verwendende Übergabepunkt bestimmt werden, woraus sich gleichzeitig der zu bevorzugende Standort des vom Betreiber der Nutzerdomäne ausgewählten CP ableitet. Es ist dann, wie bereits ausgeführt, eine Frage der Implementierung, ob die Nutzung von Cloudservices anfordernde Endeinrichtungen der Nutzerdomäne automatisiert an diesen Standort des CP vermittelt werden oder die letztliche Entscheidung hierüber einem Administrator des Betreibers der Nutzerdomäne überlassen wird.

Wie ebenfalls bereits früher ausgeführt, wird der automatisierte Prozess zur Berechnung des zu verwendenden Übergabepunktes respektive zur Ermittlung des zu bevorzugenden Standorts des CP, im Falle einer erstmaligen, durch Endeinrichtungen der Nutzerdomäne erfolgenden Anforderung zur Nutzung von Cloudservices des ausgewählten CP und/oder im Falle von Änderungen bei den in der mindestens einen Datenbank gehaltenen Lokalisierungsinformationen durchlaufen. Im Hinblick auf Letzteres ist es dabei vorzugsweise vorgesehen, dass die Liste der zur Cloudinfrastruktur des CP gehörenden Standorte durch den CLPM des ISP zeitperiodisch (zum Beispiel täglich, wöchentlich oder monatlich, was im CLPM entsprechend festzulegen ist) auf Änderungen überprüft wird. An dieser Stelle sei darauf hingewiesen, dass es eine Frage der Konfiguration der Infrastrukturen der Serviceanbieter, nämlich der Beschaffenheit der Netzinfrastruktur ISP einerseits und der Infrastruktur des CP andererseits, sowie zwischen ISP und CP getroffener Vereinbarungen ist, wo die mindestens eine oder gegebenenfalls auch mehrere Datenbanken physisch oder logisch realisiert sind, in welcher oder welchen die für die automatische Berechnung des zu verwendenden Übergabepunktes des ISP verwendeten Lokalisierungsinformationen gehalten werden.

Ein zur Lösung der Aufgabe und zur Durchführung des zuvor beschriebenen Verfahrens geeignetes System umfasst
- eine Nutzerdomäne, welche wenigstens eine computertechnische Endeinrichtung und eine Internetzugangseinrichtung umfasst,
- Cloudeinrichtungen zur Bereitstellung der Cloudservices an den Standorten der Cloudinfrastruktur des vom Betreiber der Nutzerdomäne ausgewählten CP,
- Netzwerkeinrichtungen eines dem Betreiber der Nutzerdomäne mit seiner Netzinfrastruktur einen Zugang zum Internet bereitstellenden Internet Service Providers (ISP), wobei es sich bei diesen Einrichtungen insbesondere um Einrichtungen für das Netzwerk- und Dienstemanagement und um Einrichtungen zur Datenübertragung, einschließlich mehrerer Übergabepunkte zur Cloudinfrastruktur des CP, handelt,
- mindestens eine Datenbank, in der Lokalisierungsinformationen gehalten werden, nämlich Informationen zum Standort der Internetzugangseinrichtung der Nutzerdomäne, eine Liste mit den Lokationen der Übergabepunkte im Netz des ISP sowie eine Liste der zur Cloudinfrastruktur des CP gehörenden Standorte.

Das System zeichnet sich hierbei dadurch aus, dass von der Netzinfrastruktur des ISP auch ein Cloud Location Peering Manager (CLPM) umfasst ist, nämlich eine Managementkomponente, die dafür ausgebildet und eingerichtet ist, den zum Verfahren beschriebenen automatisierten Prozess zur Bestimmung des zu verwendenden Übergabepunktes respektive zur Ermittlung des zu bevorzugenden Standorts des CP, auszuführen.

Der CLPM ist dabei vorzugsweise als Bestandteil eines Multi Domain Orchestrators (MDO) oder eines Netzwerkmanagementsystems (NMS) des ISP ausgebildet. Was die Liste mit den zur Cloudinfrastruktur des CP gehörenden Standorten anbelangt, so kann diese beispielsweise durch eine sich im Zugriff des CLPM befindende Datenbank des CP gehalten werden. Dies schließt indes nicht aus, dass diese Liste im Zuge ihrer zeitperiodischen Überprüfung auf Veränderungen der hierin gehaltenen Lokalisierungsinformationen auf ein System respektive in eine Datenbank des ISP gespiegelt wird. Denkbar ist es aber eben auch, dass der CLPM die in dieser Liste gehaltenen Lokalisierungsinformationen zu Standorten des CP jeweils unmittelbar bei Ausführung des automatisierten Prozesses zur Berechnung des zu verwendenden Übergabepunktes aus der Datenbank des CP abruft.

Unabhängig hiervon können entsprechende Lokalisierungsinformationen an die Systeme des ISP, so insbesondere an dessen CLPM, vorzugsweise durch Dateien im XML-Format (mit XML = Extensible Markup Language) übertragen werden. Entsprechendes gilt analog, wenn der CLPM Lokalisierungsinformationen, nämlich eine Liste mit den Lokationen der Übergabepunkte des ISP, aus anderen Netzwerkeinrichtungen des ISP abruft.

Anhand von Zeichnungen soll nachfolgend ein Ausführungsbeispiel für die Erfindung gegeben und erläutert werden. Die Zeichnungen zeigen im Einzelnen:
- Fig. 1:: ein Schema zur Topologie des erfindungsgemäßen Systems gemäß einer möglichen Ausbildungsform,
- Fig. 2:: ein Sequenzdiagramm für einen möglichen Ablauf der automatisierten Berechnung des zu verwendenden Übergabepunktes des ISP.

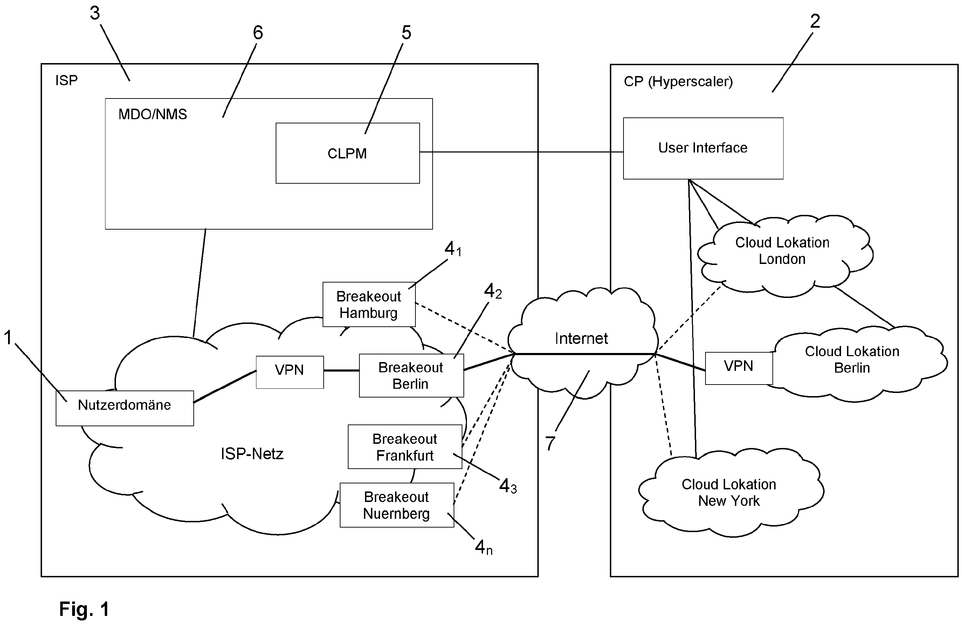

Die Fig. 1 zeigt beispielhaft eine mögliche Topologie des erfindungsgemäßen Systems. Dieses umfasst im Wesentlichen die Infrastrukturen einerseits des ISP (Netzinfrastruktur 3) und andererseits des CP respektive Hyperscalers (Cloudinfrastruktur 2), welche über das Internet 7 Daten miteinander austauschen können. An das Netz des ISP sind die Endeinrichtungen des Betreibers einer Nutzerdomäne 1, das heißt eines Kunden des ISP, über eine zu der Nutzerdomäne 1 gehörende (nicht dargestellte) Internetzugangseinrichtung angebunden. Das Netzwerk (Überragungsnetz) des ISP als Teil der Netzinfrastruktur 3 des ISP, umfasst eine Mehrzahl von Übergabepunkten 4₁, 4₂, 4₃, ...4ₙ - sogenannte Breakouts -, über welche Cloudeinrichtungen des von dem Betreiber der Nutzerdomäne 1 ausgewählten Cloud Providers (CP) an unterschiedlichen Standorten über das Internet 7 kontaktiert werden können.

Als wesentliches Element umfasst die Netzinfrastruktur 3 des ISP außerdem einen Cloud Location Peering Manager (CLPM 5), welcher dazu ausgebildet und eingerichtet ist, entsprechend dem beschriebenen Verfahren den im Hinblick auf minimale Datenübertragungszeiten für den Datenaustausch mit den Cloudeinrichtungen des CP zu verwendenden Übergabepunkt 4₁, 4₂, 4₃, ...4ₙ im Netz des ISP zu berechnen. Dieser CLPM 5 ist seitens des ISP als Bestandteil eines Multi Domain Orchestrators (MDO) oder eines Netzwerkmanagementsystems 6 (NMS) ausgebildet.

Gemäß dem gezeigten Ausführungsbeispiel verfügt der CP respektive der Hyperscaler, über Standorte in London, Berlin und New York, an welchen sich seine die von ihm angebotenen Cloudservices bereitstellenden Cloudeinrichtungen befinden. In dem gezeigten Beispiel wird für den Betreiber einer Nutzerdomäne 1 in Frankfurt ein Übergabepunkt 4₂ (Breakout) in Berlin ermittelt, über welchen bei der Nutzung von Cloudservices des CP, die durch Cloudeinrichtungen am Standort Berlin des CP bereitgestellt werden, der kürzeste Gesamtübertragungsweg für auszutauschende Daten gegeben ist. Zur Berechnung des insoweit zu verwendenden Übergabepunktes 4₁, 4₂, 4s, ...4ₙ kann der CLPM 5 eine Liste mit den Standorten respektive Lokationen des CP über ein Nutzerinterface (Userinterface - Nutzer dieser Schnittstelle ist in diesem Falle der ISP) beziehen.

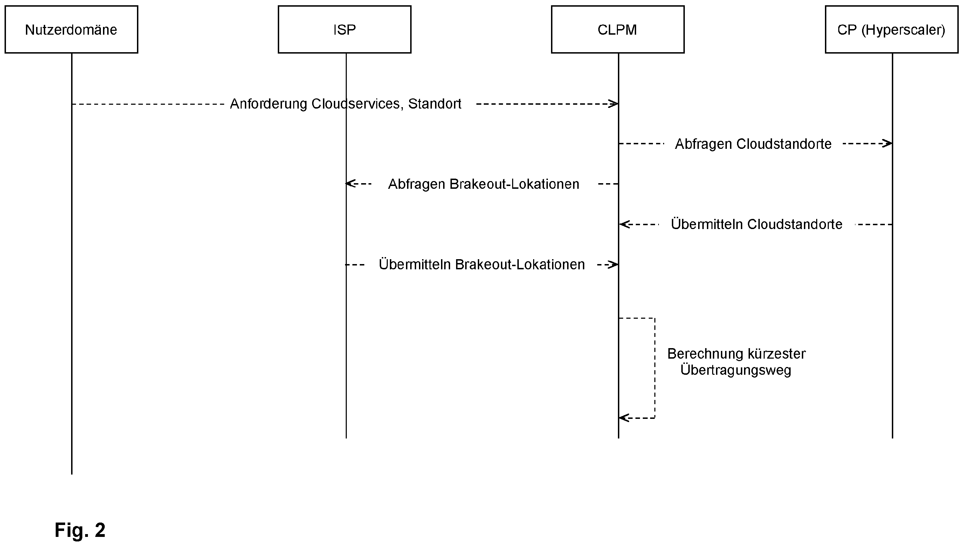

Die Fig. 2 zeigt ein Sequenzdiagramm für einen möglichen Ablauf bei der Bestimmung des zu verwendenden Übergabepunktes 4₁, 4₂, 4₃, ...4ₙ in dem Netz des ISP durch den CLPM 5. Demnach läuft bei dem CLPM 5 von einer Nutzerdomäne 1 eine erstmalige Anforderung zur Nutzung von Cloudservices eines vom Betreiber dieser Nutzerdomäne 1 ausgewählten Cloud Providers (CP) auf. In dem gezeigten Beispiel wird dabei davon ausgegangen, dass der CLPM 5 im Zuge dessen unmittelbar auch eine Lokalisierungsinformation einer zu dem Standort der anfordernden Nutzerdomäne 1 gehörenden Internetzugangseinrichtung erhält.

Der CLPM 5 fordert hierauf aus Systemen des CP respektive aus einer Datenbank, Lokalisierungsinformationen zu Standorten (Lokationen) des CP an. Von anderen Einrichtungen der Netzinfrastruktur 3 des ISP fordert der CLPM 5 ferner Lokalisierungsinformationen zur Lokation von Übergabepunkten 4₁, 4₂, 4₃, ...4ₙ (Breakouts) des ISP ab. Die entsprechenden Einrichtungen des CP übermitteln an den CLPM 5 die angeforderten Lokalisierungsinformationen zu den Standorten des CP. Gleichermaßen erhält der CLPM 5 auf seine Anforderung hin von entsprechenden Einrichtungen der Netzinfrastruktur 3 des ISP die Lokalisierungsinformationen zur Lokation der Übergabepunkte 4₁, 4₂, 4₃, ...4ₙ im Netz des ISP. Hieraufhin ermittelt der CLPM 5 in einem automatisierten Prozess unter Verwendung der erhaltenen Lokalisierungsinformationen, vorzugsweise mit Hilfe der Graphentheorie und unter Einsatz des Dijkstra-Algorithmus den unter dem Gesichtspunkt minimaler Datenübertragungszeiten respektive des kürzesten Gesamtübertragungsweges, zu verwendenden Übergabepunkt 4₁, 4₂, 4₃, ...4ₙ im Netz des ISP, woraus sich außerdem gleichzeitig der vorzugsweise zu nutzende Standort der Cloudinfrastruktur 2 des CP ergibt.

## Patentansprüche

1. Verfahren zur standortbezogenen Steuerung der mittels computertechnischer Endeinrichtungen einer Nutzerdomäne (1) über das Internet (7) erfolgenden Nutzung von Cloudservices, welche durch einen vom Betreiber der Nutzerdomäne (1) ausgewählten Cloud Provider CP auf Cloudeinrichtungen einer von dem CP an unterschiedlichen territorialen Standorten betriebenen Cloudinfrastruktur (2) bereitgestellt werden, wobei Daten, welche bei einer mittels einer Endeinrichtung der Nutzerdomäne (1) erfolgenden Nutzung von Cloudservices des CP zwischen einer von der Nutzerdomäne (1) umfassten Internetzugangseinrichtung und den diese Cloudservices an einem der Standorte des CP bereitstellenden Cloudeinrichtungen über das Internet (7) ausgetauscht werden, über Netzwerkeinrichtungen eines dem Betreiber der Nutzerdomäne den Zugang zum Internet bereitstellenden Internet Service Providers ISP und über einen von mehreren von diesen Netzwerkeinrichtungen des ISP umfassten Übergabepunkten (4₁, 4₂, 4s, ...4ₙ) zur Cloudinfrastruktur (2) des CP übertragen werden, **dadurch gekennzeichnet, dass** durch einen Cloud Location Peering Manager CLPM (5), das heißt durch eine dafür ausgebildete und eingerichtete, zu einer Netzinfrastruktur (3) des ISP gehörende Managementkomponente, unter Rückgriff auf in mindestens einer Datenbank gehaltene Lokalisierungsinformationen, nämlich auf eine Information zum Standort der Internetzugangseinrichtung der Nutzerdomäne (1), auf eine Liste mit den Lokationen der Übergabepunkte (4₁, 4₂, 4s, ...4ₙ) in der Netzinfrastruktur (3) des ISP sowie auf eine Liste der zur Cloudinfrastruktur (2) des CP gehörenden Standorte, in einem automatisierten Prozess der unter dem Gesichtspunkt minimaler Datenübertragungszeiten bei der Nutzung der Cloudservices mittels Endeinrichtungen der Nutzerdomäne (1) zu verwendende Übergabepunkt (4₁, 4₂, 4s, ...4ₙ) des ISP berechnet und somit ein zu bevorzugender, Cloudservices bereitstellender Standort des CP ermittelt wird, wobei der mittels des CLPM (5) ausgeführte Prozess im Falle einer erstmaligen, durch eine Endeinrichtung der Nutzerdomäne (1) erfolgenden Anforderung zur Nutzung von Cloudservices des CP und/oder im Falle von Änderungen bei den in der mindestens einen Datenbank gehaltenen Lokalisierungsinformationen durchlaufen wird.

2. Verfahren nach Anspruch 1, **dadurch gekennzeichnet, dass** die Cloudservices für die Endeinrichtungen der Nutzerdomäne (1) durch Cloudeinrichtungen des CP bereitgestellt werden, welche diese Cloudservices an dem Standort der Cloudinfrastruktur (2) des CP erbringen, der bei der erstmaligen, durch eine Endeinrichtung der Nutzerdomäne (1) erfolgenden Anforderung zur Nutzung von Cloudservices des CP durch den CLPM (5) als zu bevorzugender Standort ermittelt wird, wobei Cloudeinrichtungen dieses Standorts die Anforderung zur Nutzung von Cloudservices in einem automatisierten Prozess über den berechneten Übergabepunkt (4₁, 4₂, 4₃, ...4ₙ) des ISP zugeleitet wird.

3. Verfahren nach Anspruch 1 oder 2, **dadurch gekennzeichnet, dass** der zu verwendende Übergabepunkt (4₁, 4₂, 4s, ...4ₙ) des ISP vom CLPM (5) berechnet wird, indem von ihm derjenige Übergabepunkt (4₁, 4₂, 4s, ...4ₙ) ermittelt wird, bei dessen Verwendung sich für den Gesamtübertragungsweg vom Standort der Internetzugangseinrichtung der Nutzerdomäne (1) über den Übergabepunkt (4₁, 4₂, 4s, ...4ₙ) des ISP zu einem Standort der Cloudinfrastruktur (2) des CP die geringste Distanz ergibt.

4. Verfahren nach Anspruch 3, **dadurch gekennzeichnet, dass** die kürzeste Distanz für den Gesamtübertragungsweg berechnet wird mithilfe der Graphentheorie, durch Anwendung des Dijkstra-Algorithmus auf einen Graphen, dessen Kanten durch die möglichen Übertragungswege zwischen dem Standort der Internetzugangseinrichtung der Nutzerdomäne (1) und den Übergabepunkten (4₁, 4₂, 4₃, ...4ₙ) im Netz des ISP sowie zwischen den Übergabepunkten (4₁, 4₂, 4s, ...4ₙ) des ISP und den Standorten der Cloudinfrastruktur (2) des CP gebildet werden.

5. Verfahren nach einem der Ansprüche 1 bis 4, **dadurch gekennzeichnet, dass** die Liste der zur Cloudinfrastruktur (2) des CP gehörenden Standorte durch den CLPM (5) zeitperiodisch auf Änderungen überprüft wird.

6. System zur Steuerung der mittels computertechnischer Endeinrichtungen einer Nutzerdomäne (1) über das Internet (7) erfolgenden Nutzung von Cloudservices, welche durch einen vom Betreiber der Nutzerdomäne (1) ausgewählten Cloud Provider CP vermittels Cloudeinrichtungen einer an unterschiedlichen territorialen Standorten betriebenen Cloudinfrastruktur (2) bereitgestellt werden, umfassend
- die Nutzerdomäne (1), welche wenigstens eine computertechnische Endeinrichtung und eine Internetzugangseinrichtung umfasst,
- Cloudeinrichtungen zur Bereitstellung der Cloudservices an den Standorten der Cloudinfrastruktur (2) des vom Betreiber der Nutzerdomäne (1) ausgewählten CP,
- Netzwerkeinrichtungen eines dem Betreiber der Nutzerdomäne mit seiner Netzinfrastruktur (3) einen Zugang zum Internet bereitstellenden Internet Service Providers ISP, wobei die Netzwerkeinrichtungen des ISP Einrichtungen für das Netzwerk- und Dienste-Management umfassen und Einrichtungen zur Datenübertragung, einschließlich mehrerer Übergabepunkte (4₁, 4₂, 4₃, ...4ₙ) zur Cloudinfrastruktur (2) des CP, über welche Daten übertragen werden, die bei der Nutzung von Cloudservices zwischen der Internetzugangseinrichtung der Nutzerdomäne (1) und den Cloudeinrichtungen eines Standorts der Cloudinfrastruktur (2) des CP über das Internet (7) ausgetauscht werden,
- mindestens eine Datenbank, in der Lokalisierungsinformationen gehalten werden, nämlich Information zum Standort der Internetzugangseinrichtung der Nutzerdomäne (1), eine Liste mit den Lokationen der Übergabepunkte (4₁, 4₂, 4s, ...4ₙ) im Netz des ISP sowie eine Liste der zur Cloudinfrastruktur (2) des CP gehörenden Standorte,
**dadurch gekennzeichnet, dass** von der Netzinfrastruktur (3) des ISP ein Cloud Location Peering Manager CLPM (5) umfasst ist, nämlich eine Managementkomponente, die dafür ausgebildet und eingerichtet ist, unter Rückgriff auf die in der mindestens einen Datenbank gehaltenen Lokalisierungsinformationen in einem automatisierten Prozess den unter dem Gesichtspunkt minimaler Datenübertragungszeiten bei der Nutzung der Cloudservices mittels Endeinrichtungen der Nutzerdomäne (1) zu verwendenden Übergabepunkt (4₁, 4₂, 4s, ...4ₙ) des ISP zu berechnen und somit einen zu bevorzugenden, diese Cloudservices bereitstellenden Standort des CP zu ermitteln.

7. System nach Anspruch 6, **dadurch gekennzeichnet, dass** der CLPM (5) als Bestandteil eines Multi Domain Orchestrators MDO oder eines Netzwerk-Management-Systems NMS (6) des ISP ausgebildet ist.

8. System nach Anspruch 6 oder 7, **dadurch gekennzeichnet, dass** die Liste mit den zur Cloudinfrastruktur des CP gehörenden Standorten durch eine sich im Zugriff des CLPM (5) befindende Datenbank des CP gehalten wird.
